(19) Europäisches Patentamt
European Patent Office
Office européen des brevets

(11) **EP 1 070 903 B1**

(12) **FASCICULE DE BREVET EUROPEEN**

(45) Date de publication et mention
de la délivrance du brevet:
**10.03.2004 Bulletin 2004/11**

(51) Int Cl.⁷: **F16L 55/033**, G10K 11/175,
G10K 11/172

(21) Numéro de dépôt: **00402069.9**

(22) Date de dépôt: **20.07.2000**

(54) **Dispositif d'atténuation du bruit dans un tube destiné à transporter du gaz**

Gerät zur Lärmdämpfung eines mit Gas beaufschlagten Rohres

Device for attenuating noise in a pipe carrying gas

(84) Etats contractants désignés:
**AT BE CH CY DE DK ES FI FR GB GR IE IT LI LU MC NL PT SE**

(30) Priorité: **22.07.1999 FR 9909503**

(43) Date de publication de la demande:
**24.01.2001 Bulletin 2001/04**

(73) Titulaire: **Peugeot Citroen Automobiles SA 92200 Neuilly sur Seine (FR)**

(72) Inventeur: **Trochon, Eric 92400 Courbevoie (FR)**

(74) Mandataire: **Seytre, Françoise PSA Peugeot Citroen Département OPS/BPI 18, rue des Fauvelles 92250 La Garenne Colombes (FR)**

(56) Documents cités:
**EP-A- 0 077 148        GB-A- 2 222 852**

- **PATENT ABSTRACTS OF JAPAN vol. 1998, no. 13, 30 novembre 1998 (1998-11-30) -& JP 10 205680 A (TAIKISHA LTD), 4 août 1998 (1998-08-04)**
- **PATENT ABSTRACTS OF JAPAN vol. 010, no. 066 (M-461), 15 mars 1986 (1986-03-15) & JP 60 209660 A (SUZUKI JIDOSHA KOGYO KK), 22 octobre 1985 (1985-10-22)**

**Description**

La présente invention se rapporte à un dispositif d'atténuation du bruit dans un tube destiné à transporter un gaz, du type de ceux rencontrés dans les véhicules automobiles.

Elle se rapporte plus particulièrement à un dispositif d'atténuation du bruit des tubes d'échappement ou des conduits d'admission d'air.

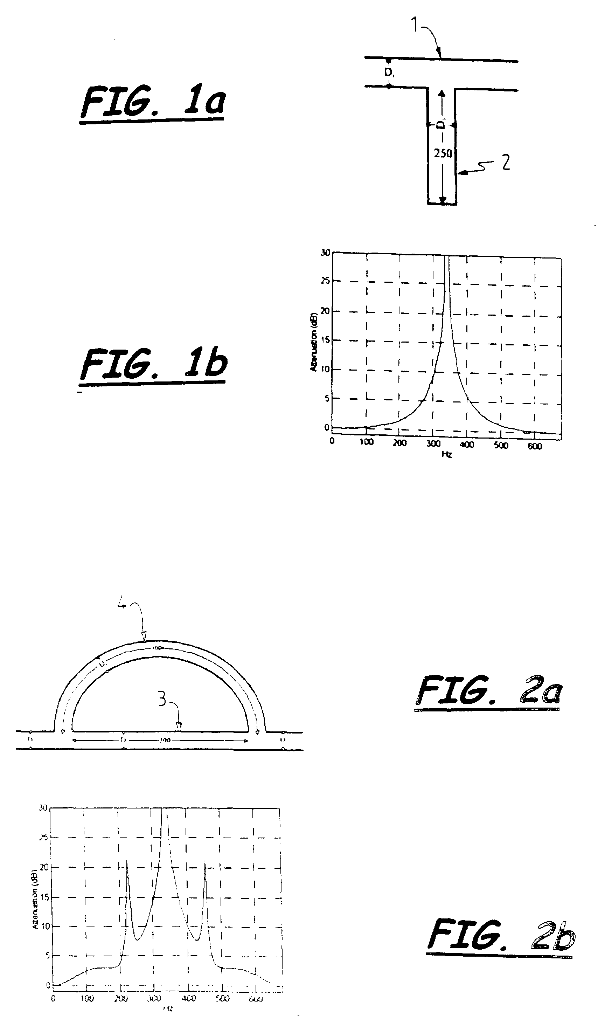

On a représenté aux figures 1a et 1b, un dispositif bien connu d'atténuation du bruit communément désigné le « quart d'onde », consistant comme visible sur la figure 1a à intégrer au tube à traiter 1 une dérivation sans issue 2. Le document EP-A-0 077 148 montre un tel dispositif.

Ce type de dispositif permet de réaliser une atténuation du bruit importante mais uniquement sur un intervalle de fréquence étroit, comme visible sur la figure 1b, c'est-à-dire entre 300 et 380 Hz pour une fréquence de calage par exemple de l'ordre de 340 Hz (une longueur d'onde à traiter de 1000 mm).

On a représenté aux figures 2a et 2b, un autre dispositif d'atténuation du bruit communément désigné « tube à interférence » voir GB-A-2 222 852, consistant comme visible sur la figure 2a à intégrer au tube à traiter 3 une dérivation d'un second tube 4 de longueur et de diamètre définis. Un tel dispositif permet avantageusement de traiter un bruit sur un intervalle de fréquence plus large que celui traité par le quart d'onde mais l'atténuation obtenue s'avère peu importante, comme visible sur la figure 2b, pour la même fréquence de calage que ci-dessus.

L'invention a pour but d'éviter notamment ce type d'inconvénient en proposant un dispositif d'atténuation du bruit qui se montre particulièrement efficace sur une large bande de fréquence et qui soit de réalisation simple.

A cet effet, l'invention a pour objet un dispositif d'atténuation du bruit comprenant les caractéristiques de la revendication 1.

Suivant d'autres modes de réalisation de l'invention:

- le dispositif comprend deux tubes désignés quart d'onde formant avec le tube de dérivation quatre tronçons de circulation du gaz entrant dans ledit tube de transport du gaz;

- la longueur de chaque tronçon Ln est définie comme suit :

$$L2 = \lambda - 0.85 \, D2$$
$$L3 = \tfrac{1}{2}\,\lambda - 0.85 \, D3$$
$$L4 = L5 = \tfrac{1}{4}\,\lambda - 0.425 \, D4$$

Où $\lambda$ est la longueur d'onde à traiter et
Dn le diamètre du tube du tronçon n.

- le diamètre de chacun des tronçons est déterminé de façon à ce qu'ils soient les plus proches possible du diamètre du tube à traiter.

- les tronçons et le tube à traiter ont tous le même diamètre.

- le diamètre des tronçons est déterminé comme suit en fonction du diamètre D1 du tube à traiter :

$$D1 = D4 = D5$$

et

$$D2 = D3 = \tfrac{3}{4}\,D1.$$

- les extrémités libres de chacun des tubes désignés quart d'onde sont reliées ensemble.

Un autre objet de l'invention concerne un conduit de gaz pour moteur de véhicule automobile du type conduit d'admission d'air, caractérisé en ce qu'il comporte au moins un dispositif d'atténuation du bruit selon la présente invention.

Les caractéristiques de l'invention mentionnées ci-dessus, ainsi que d'autres, apparaîtront plus clairement à la lecture de la description suivante d'un exemple de réalisation en se référant aux dessins annexés sur lesquels :

- la figure 1a représente un dispositif d'atténuation de l'art antérieur ;
- la figure 1b représente un diagramme illustrant l'atténuation du dispositif de la figure 1a ;
- la figure 2a représente un autre dispositif d'atténuation de l'art antérieur ;
- la figure 2b représente un diagramme illustrant l'atténuation du dispositif de la figure 2a ;
- la figure 3a représente le dispositif d'atténuation selon la présente invention ;
- la figure 3b représente un diagramme illustrant l'atténuation du dispositif de la figure 3a ;
- la figure 4 représente le dispositif d'atténuation appliqué à un conduit reliant un turbo compresseur de véhicule automobile ;
- la figure 5 représente une variante de réalisation de la forme du dispositif selon la présente invention et,
- la figure 6 représente une autre variante de réalisation de la présente invention.

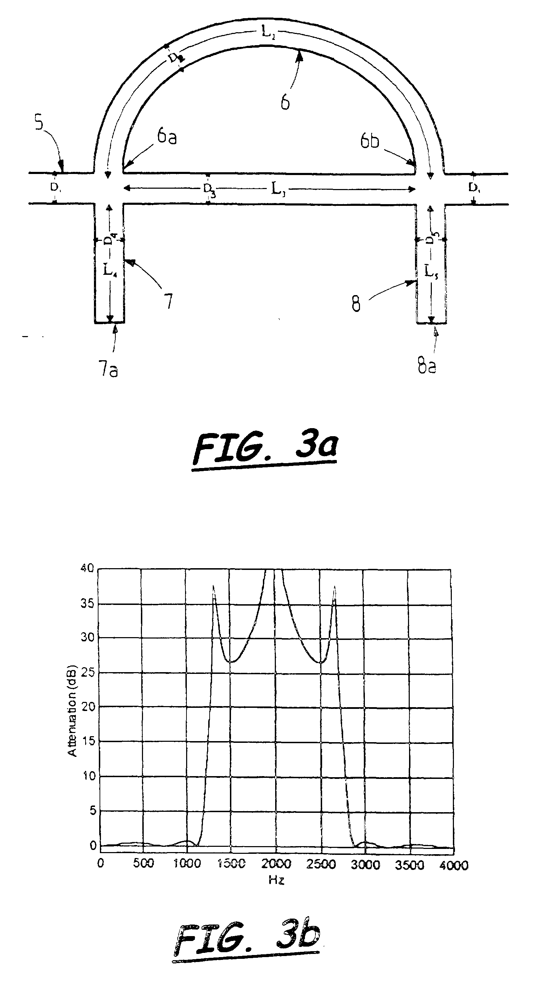

On a représenté sur les figures 3a et 3b, un dispositif d'atténuation du bruit dans un tube 5 destiné à transporter un gaz, selon la présente invention, qui est constitué d'une part d'un tube de dérivation 6 dont les deux extrémités 6a et 6b sont débouchantes dans le tube 1 à traiter, et d'autre part de deux tubes 7 et 8 dont une des extrémités 7a, 8a est fermée et dont l'autre extrémité est raccordées au tube 1 au niveau respectivement des raccords 6a et 6b du tube de dérivation 6, comme visible plus clairement sur la figure 3a, et définissant ainsi la forme générale d'un "A".

On notera que le tube de dérivation est classiquement désigné "tube d'interférence" tandis que les deux tubes 7 et 8 sont désignés "quart d'onde".

La longueur et le diamètre de chacun des tronçons du dispositif d'atténuation du bruit tel que décrit ci-dessus est déterminé de façon à optimiser l'atténuation sur une large bande de fréquence.

Ainsi, avantageusement le dimensionnement des longueurs des tronçons L2, L3, L4 et L5 visible à la figure 3a, est défini comme suit :

$$L2 = \lambda - 0.85\ D2$$
$$L3 = \tfrac{1}{2}\ \lambda - 0.85\ D3$$
$$L4 = L5 = \tfrac{1}{4}\ \lambda - 0.425\ D4$$

Où $\lambda$ est la longueur d'onde à traiter et Dn le diamètre du tube du tronçon n.

De même, le diamètre de chacun des tronçons est avantageusement déterminé de façon à ce qu'ils soient le plus proche possible les uns des autres.

Une telle configuration permet d'obtenir une atténuation avec une largeur de bande importante, par exemple située entre 1000 Hz et 3000 Hz pour une fréquence de calage des tubes à 2000 Hz.

Selon une variante, les diamètres des tronçons ont tous la même dimension.

De manière avantageuse on notera que l'atténuation du bruit est obtenue sur une bande plus large lorsque le diamètre des tronçons les plus longs du dispositif sont réduits vis-à-vis des autres comme suit :

$$D1 = D4 = D5$$

et

$$D2 = D3 = \tfrac{3}{4}\ D1..$$

On a représenté dans le tableau ci-dessous, des exemples de dimensionnement et le résultat obtenu de la largeur de bande où l'atténuation du bruit est satisfaisante :

| | | | |
|---|---|---|---|
| Fo Fréquence de calage (Hz) | 340 | 680 | 2000 |
| D diamètre des tronçons (mm) | 60 | 60 | 36 |
| $\lambda$ = Vitesse du son / longeur d'onde (mm) | 1000 | 500 | 200 |
| L2 (mm) | 950 | 140 | 170 |
| L3 (mm) | 450 | 200 | 70 |
| L4 = L5 (mm) | 225 | 100 | 35 |
| Largeur de bande (Hz) | 220   460 | 440   910 | 1300   2700 (Figure 3b) |

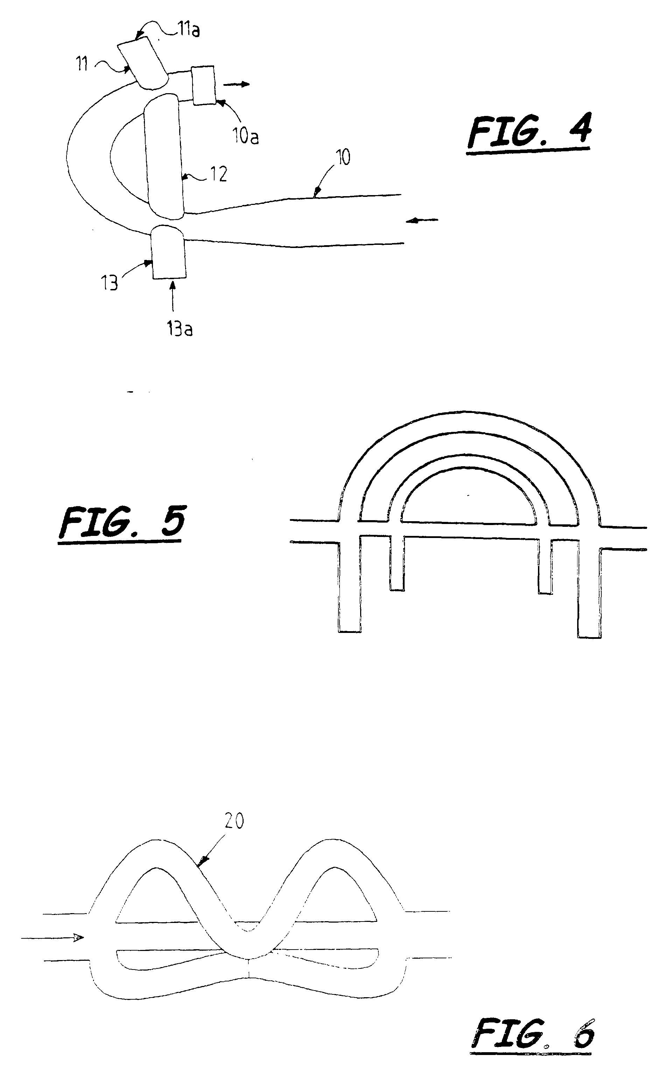

On a représenté à la figure 4, une application du dispositif d'atténuation selon la présente invention au bruit de sifflement du compresseur d'un véhicule automobile et notamment à un conduit 10 d'une ligne d'admission d'air d'un moteur turbo-compressé. Le compresseur auquel est relié le conduit 10 par l'une de ces extrémités 10a émet un sifflement qui se propage à l'intérieur du conduit et est rayonné par ses parois. La fréquence du sifflement change avec le régime du turbo, nécessitant donc un dispositif d'atténuation fonctionnant sur une large bande comme la présente invention.

A cet effet, le conduit 10 est pourvu de trois tronçons de tube respectivement 11, 12 et 13 destiné à former le dispositif d'atténuation tel que décrit ci-dessus. Deux des tronçons de tube 11 et 13 sont fermés à leurs extrémités libres 11a et 13a.

On notera que les deux tronçons 11 et 13 ne sont pas comme visible sur la figure 4 disposés dans le même plan.

Le dispositif d'atténuation est adaptable a son environnement et peut prendre des formes très diversifiées.

On a représenté à la figure 6, une forme possible du dispositif ou le tube de dérivation 20 présente une forme générale d'un "M" et dont les deux tubes sont soudées ensemble par leurs extrémités libres fermées ou obstruée. Il importe toutefois, d'éviter la réalisation de rayons de courbure trop petits.

Une seconde forme de réalisation est représentée à la figure 5, ou il est montré qu'il est possible de combiner plusieurs dispositifs selon la présente invention permettant avantageusement de traiter une bande de fréquence plus large.

On comprend à la lecture de la description ci-dessus que le dispositif d'atténuation selon la présente invention est efficace sur une bande de fréquence plus large que les différents éléments qui le constituent et est de réalisation très simple.

**Revendications**

1. Dispositif d'atténuation du bruit, ***destiné à être implanté*** dans un tube (5) à traiter destiné à transporter un gaz, **caractérisé en ce qu'**il est constitué d'une part d'un tube de dérivation (6) dont les deux extrémités (6a ,6b) sont **adaptées pour être** débouchantes dans le tube (5) à traiter, et d'autre part d'au moins un tube désigné quart d'onde(7, 8) fermé à l'une de ses extrémités (7a, 8a) désignée extrémité libre et dont l'autre extrémité est raccordée au tube (5) au niveau respectivement des raccords (6a,6b) du tube de dérivation (6) avec ledit tube formant ainsi trois tronçons de circulation du gaz entrant dans ledit tube (5) à traiter.

2. Dispositif d'atténuation du bruit selon la revendication 1, **caractérisé en ce qu'**il comprend deux tubes désignés quart d'onde formant avec le tube de dérivation (6) quatre tronçons de circulation du gaz entrant dans ledit tube (5) de transport du gaz.

3. Dispositif d'atténuation du bruit selon la revendication 1 ou 2, **caractérisé en ce que** la longueur Ln de chaque tronçon est définie comme suit :

    $$L2 = \lambda - 0.85\ D2$$
    $$L3 = \tfrac{1}{2} - 0.85\ D3$$
    $$L4 = L5 = \tfrac{1}{4}\ \lambda - 0.425\ D4$$

    Où $\lambda$ est la longueur d'onde à traiter et
    Dn le diamètre du tube du tronçon n.

4. Dispositif d'atténuation du bruit selon la revendication 1 à 3, **caractérisé en ce que** le diamétre de chacun des tronçons est déterminé de façon à ce qu'il soit le plus proche possible du diamètre du tube (5) à traiter, et du diamétre de chacun des autres tubes.

5. Dispositif d'atténuation du bruit selon l'une quelconque des revendications 1 à 4, **caractérisé en ce que** les tronçons et le tube (5) à traiter ont tous le même diamètre.

6. Dispositif d'atténuation du bruit selon l'une quelconque des revendications 1 à 4, **caractérisé en ce que** le diamétre des tronçons est déterminé comme suit en fonction du diamétre D1 du tube (5) à traiter :

    $$D1 = D4 = D5$$

et

$$D2 = D3 = ¾ D1.$$

**7.** Dispositif d'atténuation du bruit selon l'une quelconque des revendications 1 à 6, **caractérisé en ce que** les extrémités libres des tubes quart d'onde(7, 8) sont reliées ensemble.

**8.** Conduit de gaz pour moteur de véhicule automobile du type conduit d'admission d'air, **caractérisé en ce qu'**il comporte **un tube (5) destiné à transporter de l'air** et au moins un dispositif d'atténuation du bruit conforme à l'une quelconque des revendications précédentes.

**Claims**

**1.** Noise attenuation device, intended to be installed in a pipe (5) to be treated intended to carry a gas, **characterised in that** it is constituted on the one hand by a branch pipe (6) the two ends of which (6a, 6b) are adapted so as to open into the pipe (5) to be treated and, on the other hand, by at least one pipe referred to as a quarter-wave pipe (7, 8) closed at one of its ends (7a, 7b) referred to as the free end and the other end of which is connected to the pipe (5) at the level, respectively, of the connections (6a, 6b) of the branch pipe (6) with said pipe, thus forming three sections for circulation of the gas entering said pipe (5) to be treated.

**2.** Noise attenuation device according to Claim 1, **characterised in that** it comprises two pipes referred to as quarter-wave pipes forming, together with the branch pipe (6), four sections for circulation of the gas entering said gas carrying pipe (5).

**3.** Noise attenuation device according to Claim 1 or 2, **characterised in that** the length Ln of each section is defined as follows:

$$L2 = \lambda - 0.85 D2$$

$$L3 = ½ \lambda - 0.85 D3$$

$$L4 = L5 = ¼ \lambda - 0.425 D4$$

where $\lambda$ is the wavelength to be treated and Dn is the diameter of the tube of the section n.

**4.** Noise attenuation device according to Claim 1 to 3, **characterised in that** the diameter of each of the sections is determined such that it is as close as possible to the diameter of the pipe (5) to be treated, and to the diameter of each of the other pipes.

**5.** Noise attenuation device according to any one of Claims 1 to 4, **characterised in that** the sections and the pipe (5) to be treated all have the same diameter.

**6.** Noise attenuation device according to any one of Claims 1 to 4, **characterised in that** the diameter of the sections is determined as a function of the diameter D1 of the pipe (5) to be treated, as follows:

$$D1 = D4 = D5$$

and

$$D2 = D3 = ¾ D1.$$

7. Noise attenuation device according to any one of Claims 1 to 6, **characterised in that** the free ends of the quarter-wave pipes (7, 8) are connected together.

8. Gas conduit for a motor vehicle engine of the air intake conduit type, **characterised in that** it comprises a pipe (5) intended to carry air and at least one noise attenuation device according to any one of the preceding claims.


**Patentansprüche**

1. Schalldämpfende Vorrichtung zum Einsetzen in ein dafür bestimmtes Rohr (5), das für den Transport eines Gases dient, **dadurch gekennzeichnet, dass** sie einerseits aus einem Abzweigrohr (6), dessen beiden Enden (6a, 6b) angepasst sind, um im Rohr (5) zu münden, und andererseits aus mindestens einem Viertelwellen-Rohr (7, 8) besteht, das an einem seiner Enden (7a, 8a), das freies Ende genannt wird, geschlossen ist, und dessen anderes Ende auf Höhe der Verbindungen (6a, 6b) des Abzweigrohrs (6) an das Rohr (5) angeschlossen ist, wobei somit drei Zirkulations-Abschnitte des in das Rohr (5) eintretende Gases, gebildet werden.

2. Schalldämpfende Vorrichtung nach Anspruch 1, **dadurch gekennzeichnet, dass** sie zwei Viertelwellen-Rohre aufweist, die mit dem Abzweigrohr (6) vier Zirkulations-Abschnitte des Gases bilden, das in das Rohr (5) für den Gastransport eintritt.

3. Schalldämpfende Vorrichtung nach Anspruch 1 oder 2, **dadurch gekennzeichnet, dass** die Länge Ln von jedem Abschnitt folgendermaßen festgelegt ist:

$$L2 = \lambda - 0.85\ D2$$

$$L3 = \tfrac{1}{2}\ \lambda - 0.85\ D3$$

$$L4 = L5 = \tfrac{1}{4}\ \lambda - 0.425\ D4$$

Wobei λ die Wellenlänge ist und
Dn der Durchmesser des Rohrabschnitts n.

4. Schalldämpfende Vorrichtung nach einem der Ansprüche 1 bis 3, **dadurch gekennzeichnet, dass** der Durchmesser von jedem Abschnitt so festgelegt ist, dass er dem Durchmesser des Rohrs (5) und dem Durchmesser der anderen Rohre so nah wie möglich ist.

5. Schalldämpfende Vorrichtung nach einem der Ansprüche 1 bis 4, **dadurch gekennzeichnet, dass** die Abschnitte und das Rohr (5) den gleichen Durchmesser aufweisen.

6. Schalldämpfende Vorrichtung nach einem der Ansprüche 1 bis 4, **dadurch gekennzeichnet, dass** der Durchmesser der Abschnitte in Abhängigkeit von dem Durchmesser D1 des Rohrs (5) folgendermaßen festgelegt ist:

$$D1 = D4 = D5$$

und

$$D2 = D3 = \tfrac{3}{4}\ D1.$$

7. Schalldämpfende Vorrichtung nach einem der Ansprüche 1 bis 6, **dadurch gekennzeichnet, dass** die freien Enden der Viertelwellen-Rohre (7, 8) miteinander verbunden sind.

8. Lufteinlass-Gasleitung für einen Motor eines Kraftfahrzeugs, **dadurch gekennzeichnet, dass** sie ein Rohr (5), das Luft transportiert und mindestens eine schallschluckende Vorrichtung nach einem der vorhergehenden An-

sprüche aufweist.

# FIG. 1a

# FIG. 1b

# FIG. 2a

# FIG. 2b

## FIG. 3a

## FIG. 3b

FIG. 4

FIG. 5

FIG. 6